(19) Europäisches Patentamt
European Patent Office
Office européen des brevets

(11) EP 0 633 096 B1

(12) **EUROPÄISCHE PATENTSCHRIFT**

(45) Veröffentlichungstag und Bekanntmachung des Hinweises auf die Patenterteilung:
**19.03.1997 Patentblatt 1997/12**

(51) Int. Cl.$^6$: **B23Q 17/00**

(21) Anmeldenummer: **94108277.8**

(22) Anmeldetag: **30.05.1994**

(54) **Verfahren zur Einstellung und Überwachung der Spannkraft an Werkzeugmaschinen**

Adjusting and controlling method for damping forces on machine-tools

Procédé pour ajuster et contrôler la force de serrage sur les machine-outils

(84) Benannte Vertragsstaaten:
**AT CH FR GB IT LI**

(30) Priorität: **05.07.1993 DE 4322317**

(43) Veröffentlichungstag der Anmeldung:
**11.01.1995 Patentblatt 1995/02**

(73) Patentinhaber: **GILDEMEISTER AG**
**D-33689 Bielefeld (DE)**

(72) Erfinder: **Noske, Heiko, Dr.-Ing.**
**D-30659 Hannover (DE)**

(56) Entgegenhaltungen:
**WO-A-91/07245          DE-A- 3 721 615**

- **VDI ZEITSCHRIFT, Bd.133, Nr.7, 1. Juli 1991, DUSSELDORF DE Seiten 71 - 73, XP000240007 NOSKE 'SPANNKRAFTÜBERWACHUNG AN DREHMASCHINEN'**
- **WERKSTATTSTECHNIK, ZEITSCHRIFT FUR INDUSTRIELLE FERTIGUNG., Bd.79, Nr.9, 1. September 1989, BERLIN DE Seiten 521 - 525, XP000083756 STEINBERGER 'RICHTIG SPANNEN BEIM HOCHGESCHWINDIGKEITS-DREHEN'**
- **WERKSTATT UND BETRIEB., Bd.117, Nr.3, 1. März 1984, MUNCHEN DE Seiten 173 - 174 SCHULTZ 'BEDEUTUNG DER WERKSTÜCKSTEIFIGKEIT BEIM DREHEN'**

## Beschreibung

Die Erfindung betrifft ein Verfahren zur Einstellung und Überwachung der Spannkraft an Werkzeugmaschinen, insbesondere an Drehmaschinen, mit einem Spannfutter, das bewegliche Spannbacken und eine vom Spannfutter räumlich entfernte Antriebseinrichtung für die Bewegung der Spannbacken aufweist, mit Meßeinrichtungen zur Ermittlung der Spannkraft und des Spannweges.

Aus WO-91/07245 A1 ist ein Überwachungsverfahren dieser Art bekannt, das für ein Spannfutter mit über ein Keilgetriebe verstellbaren Spannbacken den Spanndruck im Stellzylinder und den Kolbenhub des Spannantriebes mißt. Aus dem Verfahrdruck und dem Verfahrweg des Spannantriebes wird die Spannarbeit berechnet, die vom Reibungszustand des Spannfutters abhängig ist. Auf diese Weise soll eine mangelhafte Schmierung und eine Verschmutzung des Spannfutters erkannt werden. Damit ist zwar eine Fehlerquelle für unzureichende Spannung erfaßt, eine sichere Spannung des Werkstucks aber noch nicht gewährleistet. Die Überwachung der Spannkraft soll auch mit einem Vergleich nur des Verfahrweges oder nur des Verfahrdruckes mit einem Schwellenwert möglich sein.

Bisher wurde davon ausgegangen, daß eine sichere Überwachung der Spannkraft nur mit Meßeinrichtungen möglich ist, die die Spannkraft unmittelbar an der Berührungsfläche zwischen Spannbacke und Werkstück (EP 0108857A2) oder in nächster Nähe zur Spannbacke, beispielsweise in der Grundbacke des Spannfutters (DE4040309A1), aufnehmen. Diese Anordnung hat den Vorteil, daß die tatsächliche auf das Werkstück wirkende Spannkraft ermittelt wird und die Einflüsse der Übertragungsglieder ausgeschlossen werden. Sie hat jedoch den großen Nachteil, daß die gewonnenen Signale von einem rotierenden Bauteil zur Steuerung übertragen werden müssen. Dafür ist ein erheblicher Aufwand zu treiben und Übertragungsfehler sind nicht völlig auszuschließen.

Es ist deshalb auch schon in DE 3 149 612 C2 vorgeschlagen worden, die Spannkraft mittels eines Spannkraftaufnehmers zu messsen, der anstelle eines Werkstücks in das Spannfutter eingespannt wird. Damit soll der Einfluß der Fliehkraft berücksichtigt werden. Die unterschiedliche Verformung des Spannkraftaufnehmers im Vergleich zu der des Werkstücks soll rechnerisch bestimmt werden. Bei diesem Verfahren ist also nicht nur die Steifigkeit der Spanneinrichtung zu bestimmen, sondern auch die des Spannkraftaufnehmers und die eines jeden zu bearbeitenden Werkstücks. Dies stellt einen erheblichen Aufwand dar. Außerdem kann die Messung nur zwischen den Bearbeitungen erfolgen, so daß die Werkzugmaschine während dieser Zeit nicht produzieren kann.

Schließlich wird hierbei zwar die augenblickliche Spannkraft ermittelt, jedoch bleibt die tatsächlich auf das Werkstück einwirkende Spannkraft unbekannt, da sich zwischen den Messungen einstellende Veränderungen nicht erfaßt werden können. Die Spannkraft wird also nicht überwacht.

Der Erfindung liegt die Aufgabe zugrunde, bei rotierenden Spannvorrichtungen mit an nicht rotierenden Elementen angeordneten Meßeinrichtungen, die Sicherheit und Zuverlässigkeit der Spannkraftüberwachung und der Spannkrafteinstellung zu erhöhen.

Die Aufgabe wird jeweils durch die Merkmale der Ansprüche 1 und 2 gelöst.

Die Erfindung macht sich die Tatsache zunutze, daß die Spannvorrichtung und das Werkstück einer Verformung unterliegen, die von der Größe der Einspannkraft abhängig ist. Mit dem vorgeschlagenen Verfahren wird die Messung unabhängig vom Werkstückdurchmesser und unabhängig von der Drehlage der Werkstückspindel.

Eine Änderung im Zustand des Spannfutters wird direkt durch die damit zusammenhängende Änderung der Verformung des Spannfutters bzw. durch die Änderung der Wegdifferenz erfaßt.

In den VDI-Richtlinien ist eine Berechnungsmethode angegeben, mit der die statische Spannkraft unter Berücksichtigung der bei der Rotation des Spannfutters auftretenden Fliehkräfte berechnet werden soll. Die Methode geht davon aus, daß die gesamte Fliehkraft spannkraftmindernd wirkt, obwohl in Wirklichkeit durch die elastische Verformung des Werkstücks nur ein Bruchteil der Fliehkraft wirksam wird. Das kann dazu führen, daß die voreingestellte, statische Spannkraft größer oder die Drehzahl des Spannfutters kleiner als erforderlich gewählt wird. Die Folge ist eine erhöhte Ungenauigkeit der Werkstückbearbeitung wegen der Werkstückverformung oder eine geringere Produktivität. In weiterer Ausgestaltung der Erfindung wird deshalb die gemessene Wegdifferenz dazu herangezogen, die erforderliche Ausgangsspannkraft oder die Höchstdrehzahl genauer zu bestimmen als dies nach den Richtlinien möglich ist. Wird die Referenzmessung in vorbestimmten Intervallen wiederholt, dann geben die Veränderungen des Wegdifferenzwertes einen Hinweis auf Veränderungen im Zustand des Spannfutters. Auf diese Weise läßt sich der Einfluß von Reibung und Verschleiß im Spannfutter erkennen. Es können so Anzeigen für mangelhafte Schmierung oder fällige Spannfutterwartungsarbeiten gewonnen werden.

Bei dem Meßverfahren mit Referenzwelle ist es immerhin noch erforderlich mindestens bei jedem Backen- oder Futterwechsel eine Referenzmesssung durchzuführen. Wenn der Wert der von den Spannfutterherstellern angegebenen Radialsteifigkeit $C_{FR}$ der Spannfutter verwendet wird, läßt sich der wirksame Fliehkraftanteil allein aus der gemessenen Wegdifferenz für jedes Werkstück bestimmen, wobei sich die dynamische Spannkraft bei Innenspannung durch den Fliehkraftanteil erhöht und bei Außenspannung verringert.

Die Erfindung wird an Hand der nachfolgenden Darstellungen näher erläutert. Es zeigen:

Fig. 1    eine schematische Darstellung der Spannvorrichtung;

Fig. 2    ein Druck-Wegdiagramm eines Spannvorgangs;

Fig. 3    ein Diagramm der Verformung von Spannfutter und Werkstück;

Fig. 4    eine Prinzipdarstellung der steuerungstechnischen Verknüpfung.

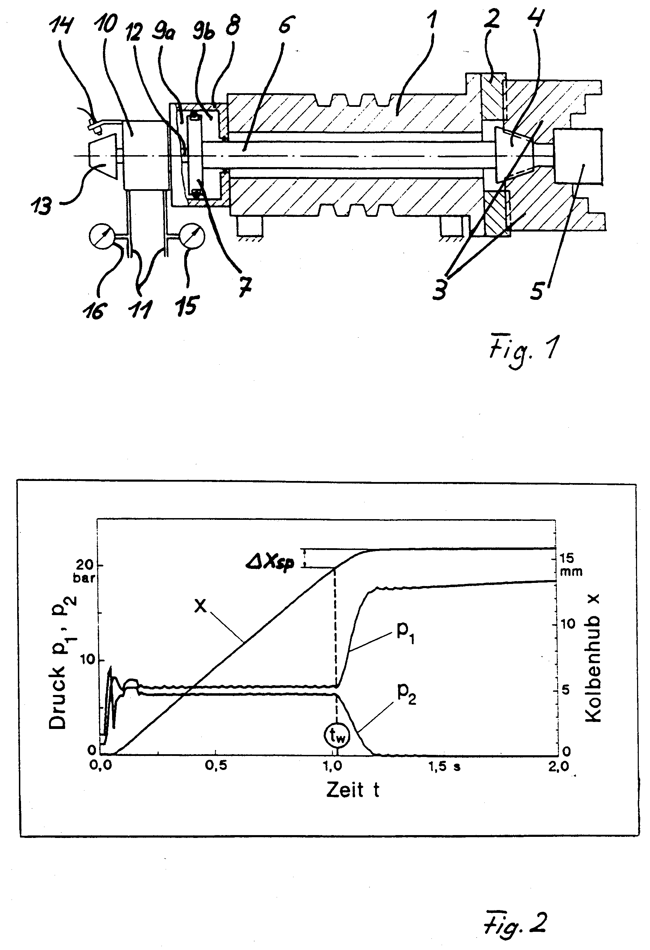

In Fig. 1 sind die wesentlichen Elemente einer Werkstückspannvorrichtung dargestellt. Die Drehmaschinenspindel 1 trägt ein Spannfutter 2, an dem Spannbacken 3 radialverschieblich geführt sind. Die Spannbacken 3 werden über ein Keilgetriebe 4 verstellt, so daß sie ein Werkstück 5 einspannen. Das Keilgetriebe 4 ist über eine Zugstange 6 mit dem Kolben 7 eines Hydraulikzylinders 8 verbunden und bildet in ihm die Druckkammern 9a, 9b, die über einen Druckmittelverteiler 10 mit den Hydraulikleitungen 11 verbunden sind. Der Kolben 7 ist mit einem den Druckmittelverteiler 10 durchragenden Führungsbolzen 12 verbunden, der einen Weggeber 13 trägt, der auf einen Wegaufnehmer 14 wirkt. Jede der Druckleitungen 11 ist mit einer Druckmeßeinrichtung 15,16 verbunden. Es kann auch ein Differenzdruckmesser zwischen den Druckleitungen 11 verwendet werden.

Die Funktionsweise der Spannvorrichtung wird in Verbindung mit Fig. 2 beschrieben. Zum Zeitpunkt t=0 sind die Spannbacken 3 in ihrer am weitesten geöffneten Stellung. Wird nun ein Spannvorgang eingeleitet, so wird der Druckkammer 9b über die eine Druckleitung 11 Druckmittel zugeführt. Beim Einschalten des Wegeventils ergibt sich ein steiler Druckanstieg auf einen Wert, der zum Verstellen der unbelasteten Spannbacken 3 ausreicht. Dieser steile Anfangsdruckverlauf darf für die folgende Auswertung nicht berücksichtigt werden. Das in der gegenüberliegenden Druckkammer 9a befindliche Hydrauliköl muß aus dieser verdrängt werden. Durch die Strömungsverluste stellt sich ein Gegendruck $p_2$ ein.

Der Spanndruck $p_1$ ist zu dieser Zeit nur geringfügig größer als der Gegendruck, weil zur Verstellung der Spannbacken 3, die das Werkstück 5 noch nicht berühren, zusätzlich lediglich die innere Reibung des Spannfutters überwunden werden muß. Der Weg X des Spannkolbens 7 läßt die gleichmäßige Zustellung der Spannbacken 3 in seinem linear steigenden Bereich erkennen. Zum Zeitpunkt tw treffen die Spannbacken 3 auf das Werkstück 5. Da das Werkstück der Spannbackenbewegung einen Widerstand entgegenstellt, wird die weitere Bewegung der Spannbacken verzögert, was sich in der Abflachung der Kurve des Kolbenhubes X ausdrückt. Gleichzeitig steigt der Spanndruck $p_1$ auf seinen maximal voreingestellten Wert, während der Gegendruck $p_2$ auf 0 sinkt, weil die Strömungsverluste durch die verzögerte Kolbenbewegung absinken. Dieser mit $\Delta X_{sp}$ bezeichnete Bereich des Kolbenhubs, der mit der Anlage der Spannbacken 3 am Werkstück 5 beginnt und mit dem Aufbau des vollen Spanndrucks endet, ist ausschließlich auf die Verformung des Spannfutters und des Werkstücks zurückzuführen.

Der Zeitpunkt der Anlage der Spannbacken 3 am Werkstück 5 kann eindeutig am Anstieg des Spanndruckes erkannt werden. Damit ist es für die Überwachung unerheblich, wann dies geschieht. Die Messung des Differenzweges wird unabhängig vom tatsächlichen Werkstückdurchmesser. Eine Verringerung der auf das Werkstück 5 ausgeübten Spannkraft, infolge eines erhöhten Verbrauchs an Energie in einem der beteiligten Übertragungsglieder, muß zwangsläufig zu einer Änderung der Wegdifferenz $\Delta X_{sp}$ führen.

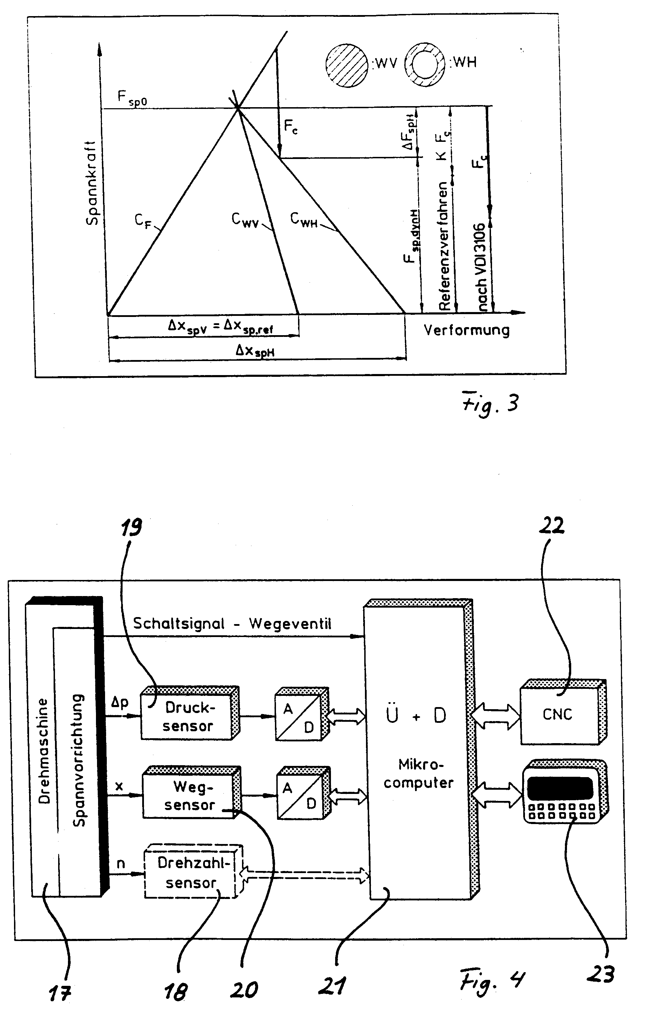

Die Wegdifferenz $\Delta X_{sp}$ und ihre Aufteilung auf die Verformung von Werkstück und Spannfutter wird in Fig. 3 veranschaulicht. Die Fliehkraft $F_c$ der Spannbacken führt zu einer zusätzlichen Verformung des Spannfutters entsprechend der Steifigkeit $C_F$ Dadurch wird die auf das Werkstück ausgeübte Spannkraft $F_{sp.dyn}$ verringert; infolge der Elastizität des Werkstücks jedoch nicht um die gesamte Fliehkraft, wie dies bei der Berechnung nach VDI 3106 angenommen wird, sondern nur um einen Teil davon. Dieser Teil ist werkstückabhängig, wie das dargestellte Beispiel für eine Vollwelle WV mit der Steifigkeit $C_{WV}$ und eine Hohlwelle WH mit der Steifigkeit $C_{WH}$ zeigt.

Da die Spanabnahme bei elastisch verformtem Werkstück erfolgt, ist das in der Spanneinrichtung absolut rund bearbeitete Werkstück nach der Entspannung und Rückkehr in seine ursprüngliche Form unrund. Es ist daher von entscheidender Bedeutung, das Werkstück mit einer möglichst geringen Spannkraft zu belasten.

Fig. 4 zeigt den prinzipiellen gerätetechnischen Aufbau zur Sicherung der statischen und dynamischen Spannkraft an Drehmaschinen. Die num. gesteuerte Drehmaschine 17 ist üblicherweise mit einem Drehzahlgeber 18 ausgestattet, der die Drehzahl der Werkstückspindel 1 zur Drehmaschinensteuerung überträgt. Die Spannvorrichtung weist einen Drucksenor 19 auf, dessen analoge Signale zur Übertragung in einem Analog-Digitalwandler in digitale Form umgesetzt werden kann. Außerdem ist die Spannvorrichtung mit einem Wegsensor 20 versehen, der analog oder digital arbeiten kann. Spindeldrehzahl, Spanndruck und Spannweg werden ständig zu einem Mikrocomputer 21 übertragen, der die Daten in der geschilderten Weise verarbeitet. Der Mikrocomputer kommuniziert mit einer CNC-Steuerung 22 und einem Bediengerät 23.

**Patentansprüche**

1.  Verfahren zur Einstellung und Überwachung der Spannkraft an Werkzeugmaschinen, insbesondere an Drehmaschinen, mit einem Spannfutter (2), das bewegliche Spannbacken (3) und eine vom Spannfutter (2) räumlich entfernte Antriebseinrichtung für die Bewegung der Spannbacken (3) aufweist, mit Meßeinrichtungen (13;14;15;16;19;20) zur Ermittlung der Spannkraft und des Spannweges, dadurch gekennzeichnet, daß die Wegdifferenz ($\Delta X_{sp}$) zwischen der Position des Spannantriebs bei einer prägnanten Änderung der Spannkraft und dem Endwert des Spannweges ermittelt wird und die Wegdifferenz mit einem vorgegebenen Wert zur Gewinnung eines Ausgangssignals verglichen wird.

2. Verfahren zur Einstellung und Überwachung der Spannkraft an Werkzeugmaschinen, insbesondere an Drehmaschinen, mit einem Spannfutter (2), das bewegliche Spannbacken (3) und einen über eine Zugstange (6) mit dem Spannfutter (2) verbundenen Kolben (7) eines Antriebszylinders (8) für die Bewegung der Spannbacken (3) aufweist, mit Meßeinrichtungen (13;14;15;16) zur Ermittlung des Spanndruckes und des Kolbenhubes dadurch gekennzeichnet, daß die Wegdifferenz zwischen der Position des Kolbens (7) bei einer prägnanten Änderung des Spanndruckes und der Kolbenendposition ermittelt wird und die Wegdifferenz mit einem vorgegebenen Wert zur Gewinnung eines Ausgangsignales verglichen wird.

3. Verfahren zur Einstellung und Überwachung der Spannkraft an Werkzeugmaschinen nach Anspruch 1 oder 2, dadurch gekennzeichnet, daß die Änderung der Spannkraft oder die Änderung des Spanndruckes durch den Gradienten des Spannkraft- oder des Druckverlaufs festgestellt wird.

4. Verfahren zur Einstellung und Überwachung der Spannkraft an Werkzeugmaschinen nach Anspruch 1 oder 2, dadurch gekennzeichnet, daß die durch den Einschaltimpuls der Spannvorrichtung hervorgerufene Änderung der Spannkraft oder des Spanndruckes nicht zur Ermittlung der Wegdifferenz herangezogen wird.

5. Verfahren zur Einstellung und Überwachung der Spannkraft an Werkzeugmaschinen nach Anspruch 1 oder 2, dadurch gekennzeichnet, daß ein Referenzkörper in das Spannfutter (2) eingespannt wird und die Wegdifferenz für diesen Referenzkörper ermittelt wird; daß der Quotient aus Wegdifferenz des Referenzkörpers und Wegdifferenz des zu bearbeitenden Werkstückes gebildet wird und daß nach dem ermittelten Quotienten die Ausgangsspannkraft und/oder die Drehzahl des Spannfutters (2) bestimmt wird.

6. Verfahren zur Einstellung und Überwachung der Spannkraft an Werkzeugmaschinen nach Anspruch 1 oder 2, dadurch gekennzeichnet, daß die Mindestspannkraft für vorgegebene Drehzahlen mit der Gleichung

$$F_{sp,dyn} = F_{sp_o} + k\,F_C$$

ermittelt wird, wobei $F_{sp,dyn}$ die dynamische Spannkraft, $F_{spo}$ die einzustellende Mindestspannkraft und $F_C$ die Fliehkraft bedeuten und der Faktor k sich aus

$$k = \frac{\Delta X_{sp,ref}}{\Delta X_{sp}}$$

ergibt.

7. Verfahren zur Einstellung und Überwachung der Spannkraft an Werkzeugmaschinen nach Anspruch 1 oder 2, dadurch gekennzeichnet, daß ein Referenzkörper in festgelegten Zeitintervallen in das Spannfutter (2) eingespannt und die ermittelte Wegdifferenz mit vorhergehenden Wegdifferenzwerten oder mit dem Wegdifferenzwert des Spannfutters (2) im Gutzustand verglichen wird.

8. Verfahren zur Einstellung und Überwachung der Spannkraft an Werkzeugmaschinen nach Anspruch 7, dadurch gekennzeichnet, daß ein Signal ausgegeben wird, wenn der aktuelle Referenzwert den vorhergehenden oder den Referenzwert des Spannfutters (2) im Gutzustand um einen vorgegebenen Betrag unterschreitet.

9. Verfahren zur Einstellung und Überwachung der Spannkraft an Werkzeugmaschinen nach Anspruch 1 oder 2, dadurch gekennzeichnet, daß die Mindestspannkraft für vorgegebene Drehzahlen mit der Gleichung

$$F_{sp,dyn} = F_{sp_o} \mp \frac{i_K\,F_{sp_o}}{C_{FR}\,\Delta X_{sp}}\,F_C$$

näherungsweise berechnet wird, wobei $F_{sp.dyn}$ die dynamische Spannkraft, $F_c$ die Fliehkraft, $i_k$ das Übersetzungsverhältnis des Futtergetriebes und $C_{FR}$ die radiale Spannfuttersteifigkeit bedeuten.

10. Verfahren zur Einstellung und Überwachung der Spannkraft an Werkzeugmaschinen nach Anspruch 2, dadurch gekennzeichnet, daß die Mindestspannkraft für vorgegebene Spindeldrehzahlen mit Hilfe der Gleichung

$$F_{sp,dyn} = F_{sp_o} - \frac{\eta_Z A}{\Delta X_{sp}} \left[ \frac{\eta_F i_k}{C_{FR}}^2 + \frac{1}{C_{CD}} \right] m_B \tau_s \left[ \frac{\pi n}{30} \right]^2 p_{sp}$$

aus dem Spanndruck und der Wegdifferenz berechnet wird, wobei $\eta_Z$ den Wirkungsgrad des Spannzylinders (8), $\eta_F$ den Wirkungsgrad des Spannfutters (2), $C_{FR}$ die radiale Futtersteifigkeit, $C_{CD}$ die Steifigkeit der Zugstange (6), $m_B$ die Masse der Spannbacken (3), $r_S$ den Schwerpunktradius der Spannbacken (3) und $p_{sp}$ den Spanndruck bedeuten.

## Claims

1. A method of setting and monitoring the clamping force on machine tools, in particular on lathes, having a clamping chuck (2) which has movable clamping jaws (3) and a drive means which is spatially remote from the clamping chuck (2) for the movement of the clamping jaws (3), and measuring devices (13; 14; 15; 16; 19; 20) for ascertaining the clamping force and the clamping travel, characterised in that the travel difference ($\Delta X_{sp}$) between the position of the clamping drive in the event of a succinct change in the clamping force and the final value of the clamping travel is ascertained and the travel difference is compared to a predetermined value for obtaining an output signal.

2. A method of setting and monitoring the clamping force on machine tools, in particular on lathes, having a clamping chuck (2) which has movable clamping jaws (3) and a piston (7) of a drive cylinder (8), which piston is connected to the clamping chuck (2) by way of a pull rod (6), for the movement of the clamping jaws (6), and measuring devices (13; 14; 15; 16) for ascertaining the clamping pressure and the piston stroke movement, characterised in that the travel difference between the position of the piston (7) in the event of a succinct change in the clamping pressure and the piston end position is ascertained and the travel difference is compared to a predetermined value to obtain an output signal.

3. A method of setting and monitoring the clamping force on machine tools according to claim 1 or claim 2 characterised in that the change in the clamping force or the change in the clamping pressure is established by the gradient of the clamping force or pressure variation.

4. A method of setting and monitoring the clamping force on machine tools according to claim 1 or claim 2 characterised in that the change in the clamping force or the clamping pressure, which is caused by the switch-on pulse of the clamping apparatus, is not used to ascertain the travel difference.

5. A method of setting and monitoring the clamping force on machine tools according to claim 1 or claim 2 characterised in that a reference body is clamped in the clamping chuck (2) and the travel difference for said reference body is ascertained; that the quotient of the travel difference of the reference body and the travel difference of the workpiece to be machined is formed; and that the initial clamping force and/or the speed of rotation of the clamping chuck (2) is determined in accordance with the quotient ascertained.

6. A method of setting and monitoring the clamping force on machine tools according to claim 1 or claim 2 characterised in that the minimum clamping force for predetermined speeds of rotation is ascertained with the equation:

$$F_{sp,dyn} = F_{spo} + k F_C$$

wherein $F_{sp,dyn}$ denotes the dynamic clamping force, $F_{spo}$ denotes the minimum clamping force to be set and $F_C$ denotes centrifugal force, and the factor k is obtained from

$$k = \frac{\Delta Xsp,ref}{\Delta Xsp} .$$

7. A method of setting and monitoring the clamping force on machine tools according to claim 1 or claim 2 characterised in that a reference body is clamped in the clamping chuck (2) at feed time intervals and the travel difference ascertained is compared to previous travel difference values or to the travel difference value of the clamping chuck (2) in the good condition.

**8.** A method of setting and monitoring the clamping force on machine tools according to claim 7 characterised in that a signal is outputted when the current reference value falls below the preceding value or the reference value of the clamping chuck (2) in the good condition, by a predetermined amount.

**9.** A method of setting and monitoring the clamping force on machine tools according to claim 1 or claim 2 characterised in that the minimum clamping force for predetermined speeds of rotation is approximately calculated with the following equation:

$$F_{sp,dyn} = F_{sp_o} \mp \frac{i_K F_{sp_o}}{C_{FR} \Delta X_{sp}} F_C$$

wherein $F_{sp,dyn}$ denotes the dynamic clamping force, $F_c$ denotes centrifugal force, $i_k$ denotes the transmission ratio of the chuck transmission and $C_{FR}$ denotes the radial clamping chuck stiffness.

**10.** A method of setting and monitoring the clamping force on machine tools according to claim 2 characterised in that the minimum clamping force for predetermined spindle speeds of rotation is calculated from the clamping pressure and the travel difference by means of the following equation:

$$F_{sp,dyn} = F_{sp_o} - \frac{\eta_Z A}{\Delta X_{sp}} \left[ \frac{\eta_F i_k^2}{C_{FR}} + \frac{1}{C_{CD}} \right] m_B \, r_s \left[ \frac{\pi n}{30} \right]^2 p_{sp}$$

wherein $\eta_Z$ denotes the efficiency of the clamping cylinder (8), $\eta_F$ denotes the efficiency of the clamping chuck (2), $C_{FR}$ denotes the radial chuck stiffness, $C_{CD}$ denotes the stiffness of the pull rod (6), $m_B$ denotes the mass of the clamping jaws (3), $r_s$ denotes the radius of the centre of gravity of the clamping jaws (3) and $p_{sp}$ denotes the clamping pressure.

## Revendications

**1.** Procédé pour le réglage et le contrôle de la force de serrage sur des machines-outils, en particulier sur des tours, équipées d'un mandrin de serrage (2), qui présente des mâchoires de serrage (3) mobiles et un dispositif d'entraînement éloigné dans l'espace du mandrin de serrage (2) pour le mouvement des mâchoires de serrage (3), avec des appareils de mesure (13 ; 14 ; 15 ; 16 ; 19 ; 20) pour le calcul de la force de serrage et du parcours de serrage, caractérisé en ce que la différence de parcours ($\Delta X_{sp}$) est calculée entre la position de la commande de serrage pour une variation significative de la force de serrage et la valeur finale du parcours de serrage et la différence de parcours est comparée avec une valeur prédéfinie pour l'obtention d'un signal de sortie.

**2.** Procédé pour le réglage et le contrôle de la force de serrage sur des machines-outils, en particulier sur des tours, équipées d'un mandrin de serrage (2), qui présente des mâchoires de serrage (3) mobiles et un piston (7), relié par une tige de traction (6) au mandrin de serrage (2), d'un cylindre d'entraînement (8) pour le mouvement des mâchoires de serrage (3), avec des appareils de mesure (13 ; 14 ; 15 ; 16) pour le calcul de la pression de serrage et de la course du piston, caractérisé en ce que la différence de parcours est calculée entre la position du piston (7) pour une variation significative de la pression de serrage et la position finale du piston et la différence de parcours est comparée avec une valeur prédéfinie pour l'obtention d'un signal de sortie.

**3.** Procédé pour le réglage et le contrôle de la force de serrage sur des machines-outils selon la revendication 1 ou 2, caractérisé en ce que la variation de la force de serrage ou la variation de la pression de serrage est déterminée par le gradient de la courbe de la force de serrage ou de la courbe de pression.

**4.** Procédé pour le réglage et le contrôle de la force de serrage sur des machines-outils selon la revendication 1 ou 2, caractérisé en ce que la variation de la force de serrage ou de la pression de serrage, provoquée par l'impulsion d'enclenchement du dispositif de serrage, n'est pas prise en compte pour le calcul de la différence de parcours.

**5.** Procédé pour le réglage et le contrôle de la force de serrage sur les machines-outils selon la revendication 1 ou 2, caractérisé en ce qu'un corps de référence est monté dans le mandrin de serrage (2) et la différence de parcours est déterminée pour ce corps de référence, en ce que le quotient de la différence de parcours du corps de référence et de la différence de parcours de la pièce à usiner est calculé et en ce que la force de serrage initiale et/ou le régime du mandrin de serrage (2) est déterminé en fonction du quotient calculé.

6. Procédé pour le réglage et le contrôle de la force de serrage sur des machines-outils selon la revendication 1 ou 2, caractérisé en ce que la force de serrage minimale pour des régimes prédéfinis est calculée avec l'équation

$$F_{sp,dyn} = F_{spo} + k\, F_C$$

$F_{sp,dyn}$ représentant la force de serrage dynamique, $F_{spo}$ la force de serrage minimale à régler et $F_C$ la force centrifuge et le coefficient k se déduisant de

$$k = \frac{\Delta X_{sp,ref}}{\Delta X_{sp}}$$

7. Procédé pour le réglage et le contrôle de la force de serrage sur des machines-outils selon la revendication 1 ou 2, caractérisé en ce qu'un corps de référence est monté dans le mandrin de serrage (2) à des intervalles de temps définis et la différence de parcours calculée est comparée avec des différences de parcours antérieures ou avec la différence de parcours du mandrin de serrage (2) à l'état normal.

8. Procédé pour le réglage et le contrôle de la force de serrage sur des machines-outils selon la revendication 7, caractérisé en ce qu'un signal est émis lorsque la valeur de référence actuelle est inférieure d'un montant prédéfini à la valeur antérieure ou la valeur de référence du mandrin de serrage (2) à l'état normal.

9. Procédé pour le réglage et le contrôle de la force de serrage sur des machines-outils selon la revendication 1 ou 2, caractérisé en ce que la force de serrage minimale pour des régimes prédéfinis est calculée approximativement avec l'équation suivante

$$F_{sp,dyn} = F_{sp_o} \mp \frac{i_K\, F_{sp_o}}{C_{FR}\, \Delta X_{sp}}\, F_C$$

$F_{sp.\,dyn}$ représentant la force de serrage dynamique, $F_c$ la force centrifuge, $i_k$ le rapport de transmission du mécanisme du mandrin, et $C_{FR}$ la rigidité radiale du mandrin de serrage.

10. Procédé pour le réglage et le contrôle de la force de serrage sur les machines outils selon la revendication 2, caractérisé en ce que la force de serrage minimale pour des régimes prédéfinis de la broche est calculée à l'aide de l'équation

$$F_{sp,dyn} = F_{sp_o} - \frac{\eta_Z A}{\Delta X_{sp}}\left[\frac{\eta_F\, i_k^{\,2}}{C_{FR}} + \frac{1}{C_{CD}}\right] m_B\, \tau_s \left[\frac{\pi n}{30}\right]^2 p_{sp}$$

à partir de la pression de serrage et la différence de parcours, ($\eta_z$ représentant le rendement du cylindre de serrage (8) $\eta_F$ le rendement du mandrin de serrage (2), $C_{FR}$ la rigidité radiale du mandrin, $C_{CD}$ la rigidité de la tige de traction (6), $m_B$ la masse des mâchoires de serrage (3), $r_s$ le rayon du centre de gravité des mâchoires de serrage (3) et $p_{sp}$ la pression de serrage.

Fig. 1

Fig. 2

*Fig. 3*

*Fig. 4*